(19) Europäisches Patentamt
European Patent Office
Office européen des brevets

(11) Veröffentlichungsnummer: **0 383 220 A1**

(12) # EUROPÄISCHE PATENTANMELDUNG

(21) Anmeldenummer: **90102669.0**

(22) Anmeldetag: **12.02.90**

(51) Int. Cl.5: **C08L 73/00, C08L 71/12, C08J 5/04, C08K 7/06, C08K 7/14**

(30) Priorität: **14.02.89 DE 3904342**

(43) Veröffentlichungstag der Anmeldung: **22.08.90 Patentblatt 90/34**

(84) Benannte Vertragsstaaten: **AT BE CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Lücke, Andreas, Dr.**
**Ober dem Mühlweg 4**
**D-6251 Waldbrunn(DE)**
Erfinder: **Schneller, Arnold, Dr.**
**Asternweg 41**
**D-6500 Mainz(DE)**

(54) **Faserverstärktes thermoplastisches Verbundmaterial und daraus hergestellte Formkörper.**

(57) Verbundmaterialien auf Basis PEEKK und Verstärkungsfasern ergeben Formkörper, die sich durch hohe Elastizitätsmodule auszeichnen. Sie besitzen eine höhere Steifigkeit und Wärmeformbeständigkeit gegenüber mit herkömmlichen Polyetherketonen hergestellten Formkörpern. Der Gehalt an Verstärkungsfasern beträgt 1 bis 70 Gew.-%. Derartige Verbundmaterialien lassen sich in Standardspritzgußmaschinen verarbeiten.

EP 0 383 220 A1

## Faserverstärktes thermoplastisches Verbundmaterial und daraus hergestellte Formkörper

Die vorliegende Erfindung betrifft ein faserverstärktes thermoplastisches Verbundmaterial aus Polyetheretherketonketon als Matrix und Glasfasern bzw. Kohlefasern als Verstärkung und daraus hergestellte Formkörper.

Polyetherketone stellen ein teilkristallines Matrixmatrial mit hervorragender Temperaturbeständigkeit dar. Polymere dieses Typs haben Glasübergangstemperaturen zwischen 130 und 180 °C und Schmelzpunkte zwischen 330 und 400 °C. Ihre hohen thermischen Übergangstemperaturen bewirken die hohen Wärmeformbeständigkeiten dieser Thermoplaste.

Aufgrund ihres chemischen und morphologischen Aufbaus besitzen Polyetherketone gegenüber anderen Hochtemperatur-Polymeren entscheidende Vorteile.

So haben sie gegenüber Polyimiden, die noch höhere Wärmeformbeständigkeiten erreichen können, für den Verarbeiter den entscheidenden Vorteil einer einfachen thermoplastischen Verarbeitbarkeit.

Gegenüber den amorphen Hochtemperatur-Polymeren, wie z.B. Polyethersulfonen oder Polyetherimiden haben die teilkristallinen Polyetherketone den Vorteil der höheren Lösungsmittelrißbeständigkeit und einer sehr guten Chemikalienresistenz. Weiterhin zeichnen sich die Polyetherketone durch ein gutes Gleit- und Abriebverhalten aus, das den Einsatz von Polyetherketonen z.B. im KFZ-Gewerbe und Maschinenbau ermöglicht.

Verbundmaterialien mit Polymeren dieses Typs sind bereits bekannt (DE-A 24 25 166, GB-B 1,387,303, US-A 3,434,914, EP-B 0 031 198). In der EP-B 0 031 198 wird auf die gute Wärmeformbeständigkeit (HDT) der dort beschriebenen Verbundmaterialien auf Basis PEEK hingewiesen. Es wird auch angegeben, daß der Elastizitätsmodul dieses Materials gegenüber dem nicht verstärktem Material ungewöhnlich groß sei. Beispielsweise werden Zusammensetzungen auf Basis PEEK beschrieben, bei denen die Verstärkung mit Glasfasern einen Anstieg der Wärmeformbeständigkeit (HDT) von PEEK von mindestens 3 °C pro 1 % Zusatz der Faserverstärkung bewirkt.

Als PEEK wird ein Polyetherketon bezeichnet, das aus wiederkehrenden Einheiten der Formel

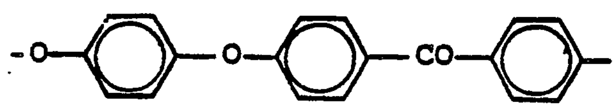 (I)

besteht, wobei "E" für den Phenoxyrest

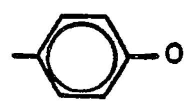

und "K" für den Phenylketorest

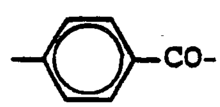

steht. Die Nomenklatur der Polyetherketone wird auf diese Weise festgelegt.

Trotz dieses hohen Niveaus der genannten Eigenschaften ist die Eignung des Materials für bestimmte Zwecke, z.B. im Motorbereich von Kraftfahrzeugen oder in der Luft- und Raumfahrt, oft noch unzureichend.

Es besteht daher ein Bedarf an thermoplastisch verarbeitbarem Verbundmaterial, das erhöhten Anforderungen gerecht wird. Insbesondere soll es in der Wärmeformbeständigkeit über den bisher kommerziell erhältlichen Materialien liegen, dabei eine hohe Zähigkeit und eine sehr gute Schmelzestabilität aufweist. Die Aufgabe der vorliegenden Erfindung ist es daher, ein Verbundmaterial zur Verfügung zu stellen, das ein hohes Niveau thermischer und mechanischer Eigenschaften besitzt, insbesondere einen hohen Elastizitätsmodul aufweist.

Ein weiteres Ziel der Erfindung sind Formkörper, die eine hohe Steifigkeit aufweisen.

Diese Aufgabe wurde gelöst durch ein faserverstärktes thermoplastisches Verbundmaterial aus (A) Polyetherketon, das mit (B) Verstärkungsfasern verstärkt ist und gegebenenfalls C) weitere übliche Zusätze

enthält, bei dem das Polyetherketon überwiegend aus den sich wiederholenden Einheiten der Formel

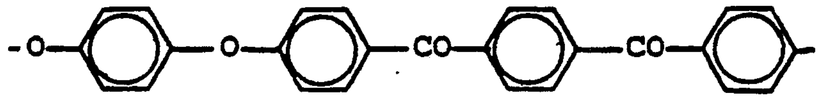 (II)

besteht, sowie eine Schmelzeviskosität MFI (400 °C/10 min) = 2 bis 250 g und eine inhärente Viskosität von mindestens 0,5 aufweist und das Verbundmaterial 1 bis 70 Gew.-%, bezogen auf die Summe A) bis C), Verstärkungsfasern enthält.

Das derart z. B. glas- oder kohlefaserverstärkte Polyetheretherketonketon (PEEKK) hat eine höhere Steifigkeit und Festigkeit bei 20 °C und darüber als das bereits auf dem Markt eingeführte verstärkte Polyetherketon PEEK mit den sich wiederholenden Einheiten der Formel (I).

Das in den erfindungsgemäßen Verbundwerkstoffen eingesetzte PEEKK weist inhärente Viskositäten von mindestens 0,5, bevorzugt 0,7 bis 1,8, insbesondere 0,8 bis 1,5 und Molekulargewichte (Zahlenmittel) von 5 000 bis 2 000 000, vorzugsweise von 10 000 bis 1 000 000 auf.

Bei der Wärmeformbeständigkeit von Polymeren wie Polyetherketonen spielt das Ether/Keto-Verhältnis eine entscheidende Rolle. Während die Ketogruppen mit ihrem steifen Bindungswinkel eine Versteifung der Polymerkette hervorrufen, und damit die Wärmeformbeständigkeit heraufsetzen, bewirken die Ethergruppen mit ihrem rotationsbeweglichem Bindungswinkel eine Flexibilisierung der Kette und setzen so die Wärmeformbeständigkeit herab. Andererseits wird durch eine Erhöhung des Ketoanteils auch der Schmelzpunkt erhöht, und damit die für das jeweilige Polyetherketon erforderliche Verarbeitungstemperatur. Das bedeutet, daß der Erhöhung der Wärmeformbeständigkeit über die Erhöhung des Ketogruppenanteils bzw. Erniedrigung des Etherbrückenanteils eine Grenze gesetzt ist, da die Standardspritzgußmaschinen zum heutigen Zeitpunkt nur Verarbeitungstemperaturen von maximal 400 °C zulassen.

So ist z.B. ein para-substituiertes Polyetherketon vom Typ PEKK (Ether/Keto-Verhältnis 1/2) auf Standardspritzgußmaschinen nicht mehr verarbeitbar, da seine Verarbeitungstemperatur von diesen Spritzgußmaschinen nicht erreicht wird. Bei einem Polyetherketon vom Typ PEKEKK (Ether/Keto-Verhältnis 2/3) ist die Verarbeitungsmöglichkeit bereits verbessert, jedoch noch nicht optimal.

Das für die Herstellung von faserverstärkten Verbundwerkstoffen und Formkörpern optimale Matrixmaterial stellt vielmehr das Polyetheretherketonketon PEEKK dar, da es mit seinem Ether/Keto-Verhältnis von 1/1 eine noch standardmässige Verarbeitung erlaubt. Gegenüber dem - dem Stand der Technik entsprechenden - PEEK hat das PEEKK den Vorteil der um ca. 20 °C erhöhten Wärmeformbeständigkeit.

Vergleichende Messungen der Reißdehnung im Zugversuch nach DIN 53 455 haben außerdem gezeigt, daß das Polyetherketon mit der Struktur PEEKK eine deutlich höhere Zähigkeit gegenüber dem Polyetherketon mit der Formel

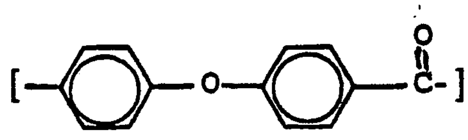 (III)

aufweist.

PEK hat zwar dasselbe Ether/Keto-Verhältnis wie PEEKK und zeigt damit ein sehr ähnliches thermisches Verhalten, aber die gegenüber PEK höhere absolute Zahl der Ether-Einheiten pro Polymereinheit bewirkt eine höhere Zähigkeit. So wurde für das PEEKK eine Reißdehnung nach DIN 53 455 von 28 % bei einer Abzugsgeschwindigkeit von 50 mm/min bestimmt, während für das PEK nur eine Reißdehnung von 7 % gefunden wurde.

Somit hat das Polyetherketon der Struktur PEEKK Eigenschaften, die für den Verarbeiter und den Anwender weitgehend optimal sind. Es besitz die maximale Wärmeformbeständigkeit bei noch standardmässiger thermoplastischer Verarbeitbarkeit.

Die Herstellung des Polyetheretherketonketons (II), das gemäß der Erfindung verwendet wird, kann in an sich bekannter Weise z.B. nach der DE-B 2 220 079 oder der EP-B 0 143 407 durch nukleophile Kondensation aus Hydrochinon und 1,4-Bis-(4-chlor-benzoyl)-benzol oder 1,4-Bis-(4-fluorbenzoyl)-benzol erfolgen. Das Polyetherketon hat eine inhärente Viskosität von mindestens 0,5, bevorzugt von 0,7 bis 1,8 und insbesondere von 0,8 bis 1,5.

Polyetherketone der Formel (II) können auch unter Anwendung der Friedel-Crafts-Reaktion durch Umsetzung von Diacylhalogeniden mit aromatischen Verbindungen mit mindestens zwei Wasserstoffatomen

in Gegenwart eines Katalysators hergestellt werden (DE-A 16 45 153, US-A 3,953,400 und US-A 3,956,240). Geeignete Ausgangsmaterialien für die Herstellung der Polyetherketone mittels Friedel-Crafts-Acylierung sind Terephthaloylchlorid oder Phosgen und Diphenylether, gegebenenfalls Diphenoxybiphenyl, Diphenoxybenzol oder p-Phenoxy-benzoylchlorid. Nach diesen Verfahren hergestellte Polyetherketone können mit entsprechenden Verbindungen modifiziert werden, um einen gewünschten Anteil an wiederkehrenden Einheiten der Formel (II) zu erreichen.

Die erfindungsgemäßen Verbundmaterialien enthalten 1 bis 70 Gew.-% Verstärkungsfasern, bezogen auf das Verbundmaterial. Eine kleinere Menge als 1 % bewirkt keine nennenswerte Verbesserung der Eigenschaften des Materials, andererseits ist die Faserkomponente bei einem Anteil über 70 Gew.-% nicht mehr homogen verteilbar.

Die verstärkenden Fasern, insbesondere die Glas- oder Kohlefasern können in Form von kontinuierlichen oder diskontinuierlichen Fasersträngen zugegeben werden, z.B. in Form von Rovings oder von Kurzschnittfasern der allgemein üblichen Dimensionen. Von kontinuierlichen Fasern werden 30 bis 65 Gew.-% bevorzugt 40 bis 65 Gew.-% und von Schnittfasern im allgemeinen 5 bis 60 Gew.-% bevorzugt 10 bis 50 Gew.% eingesetzt.

Die Faserlänge der Schnittfaser soll 1 bis 5 mm, bevorzugt 2 bis 5 mm betragen.

Die Herstellung des Verbundmaterials erfolgt durch Vermischen der Verstärkungsfasern mit dem Polyetherketon auf geeigneten Maschinen. So können z.B. Kurzschnittfasern oder Rovings dem Polymeren in einem Extruder beigemischt werden. Zur Einarbeitung von endlosen Fasern in orientierter Form eignet sich auch ein Pultrusionsprozeß oder ein Verpressen von Polyetherketonfolien oder geweben mit Verstärkungsgeweben oder -matten direkt zu Formkörpern. Andere Formkörper lassen sich durch Extrusion oder Spritzgiessen aus einem Granulat des Verbundmaterials herstellen.

Das Verbundmaterial gemäß der Erfindung kann neben Verstärkungsfasern auch weitere übliche Zusätze enthalten wie Füllstoffe, Farbpigmente, Stabilisatoren und/oder Verarbeitungshilfsmittel.

Nach der Erfindung werden vorteilhaft insbesondere dünne oder länglich geformte Körper hergestellt, bzw. solche, deren Verhältnis "größte Ausdehnung in cm" zu "Masse in g" größer als 3, vorzugsweise größer als 10 ist. Derartige Formkörper können z.B. im Automobilbau und in der Luft- und Raumfahrt eingesetzt werden, da sie gegenüber Metallteilen beispielsweise deutliche Gewichtsvorteile haben.

**BEISPIELE**

7,708 kg Hydrochinon, 15,3 kg Natriumhydrogencarbonat und 70 kg Diphenylsulfon wurden in einen Rührkessel gegeben und die Mischung nach Verdrängung der Luft durch Stickstoff auf 140 °C erhitzt. Der Ansatz wurde unter Rühren bei 140-150 °C belassen, bis die Gasentwicklung nachgelassen hatte und anschließend auf 210 °C erhitzt. Bei Erreichen dieser Temperatur wurden 22,45 kg 1,4-Bis-(4-fluorbenzoyl)-benzol (BFB) zugefügt und die Temperatur des Ansatzes innerhalb einer Stunde auf 310 °C erhöht. Nach einer Verweilzeit von 20 Minuten wurde die Reaktionsmischung abgekühlt, zerkleinert und zur Entfernung von Salzen und Diphenylsulfon wechselweise mit Wasser und Schwefelsäure und mit Aceton gewaschen. Das Polymerpulver wurde im Trockenschrank bei 120 °C/100 mbar getrocknet, mit 0,125 % Triphenylphosphit und 0,125 % Triphenylphosphat unter Zugabe von 0,1 % Polytetrafluorethylen (PTFE) als Schmiermittel gemischt und bei 400 °C extrudiert.

Das erhaltene PEEKK mit einer Schmelzeviskosität (MFI) nach DIN 53 735 von 15 g (400 °C/10 min) wurde auf einer Krauss-Maffei Spritzgußmaschine in Biegestäbe nach DIN 53 457 spritzgegossen. Zylindertemperaturen vom Einzug zur Düse betrugen: 380 °C, 390 °C, 390 °C, Düse 395 °C. Die Werkzeugtemperatur betrug 200 °C.

Die gleichen Probekörper wurden hergestellt aus PEEKK mit einem Anteil von 30 Gew.-% Kohlefaser der Marke (R)Grafil XA-S/PES (Hysol Grafil Ltd, Coventry, England), bzw. mit 10 Gew.-%, 20 Gew.-% und 30 Gew.-% Glasfasern der Marke Owens Corning OCF 497 ZZ (Owens Corning Fiberglas Corp, Toledo, USA). Zum Vergleich wurden Probekörper hergestellt auf der Basis PEEK mit 30 Gew.-% Kohlefaser und 30 Gew.-% Glasfaser. Dies Probekörper wurden - entsprechend dem 20 °C niedrigeren Schmelzpunkt des PEEK - bei tieferen Zylindertemperaturen hergestellt: 360 °C, 370 °C, 370 °C, 375 °C. Die Werkzeugtemperatur betrug 180 °C.

In der Tabelle sind die Meßwerte des Elastizitäts-Tangentenmoduls der Europa-Norm EN 61 aufgeführt.

Das unverstärkte PEEK ist das Verkaufsprodukt (R)Victrex 450 G, das mit 30 Gew.-% Glasfaser verstärkte Produkt ist Victrex 450 GL 30, und das mit 30 Gew.-% Kohlefaser verstärkte Produkt ist das Victrex 450 CA 30 (Hersteller: Imperial Chemical Industries, Welwyn Garden City, England).

Tabelle:

| Beispiel | Glasfaser | Kohlefaser | Material | Elastizitätsmodul |
|---|---|---|---|---|
| | Gew.-% | Gew.-% | | Tangentenmodul nach EN 61 |
| 1 | - | - | PEEKK | 4 161 |
| 2 | 30 | - | PEEKK | 12 227 |
| 3 | - | 10 | PEEKK | 13 223 |
| 4 | - | 20 | PEEKK | 19 150 |
| 5 | - | 30 | PEEKK | 22 499 |
| 6(Vergleich) | - | - | PEEK | 3 896 |
| 7(Vergleich) | 30 | - | PEEK | 9 637 |
| 8(Vergleich) | - | 30 | PEEK | 18 166 |

Aus den Resultaten geht hervor, daß Formteile aus Verbundmaterialien auf Basis PEEKK höhere Elastizitätsmodule besitzen als Verbundmaterialien auf Basis PEEK, sodaß Formteile aus diesen Materialien auch eine höhere Steifigkeit und Wärmebeständigkeit aufweisen.

## Ansprüche

1. Faserverstärktes, thermoplastisches Verbundmaterial aus (A) Polyetherketon, das mit (B) Verstärkungsfasern verstärkt ist und gegebenenfalls C) weitere übliche Zusätze enthält, dadurch gekennzeichnet, daß das Polyetherketon überwiegend aus den sich wiederholenden Einheiten der Formel

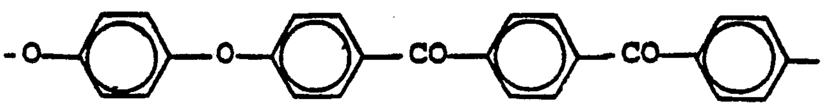 (II)

besteht, sowie eine Schmelzeviskosität MFI (400° C/10 min) = 2 bis 250 g und eine inhärente Viskosität von mindestens 0,5 aufweist und das Verbundmaterial 1 bis 70 Gew.-%, bezogen auf die Summe A) bis C), Verstärkungsfasern enthält.

2. Verbundmaterial nach Anspruch 1, dadurch gekennzeichnet, daß die Verstärkungsfasern Glas- oder Kohlefasern oder eine Mischung davon sind und in kontinuierlicher oder diskontinuierlicher Form vorliegen.

3. Verbundmaterial nach Anspruch 2, dadurch gekennzeichnet, daß die Fasern als Rovings, Schnittfasern, Matten oder Gewebe vorliegen.

4. Verbundmaterial nach einem oder mehreren der Ansprüche 1 bis 3, dadurch gekennzeichnet, daß es 5 bis 60 Gew.-% Schnittfasern oder 30 bis 65 Gew.-% Endlosfasern enthält.

5. Verbundmaterial nach einem oder mehreren der Ansprüchen 1 bis 4, dadurch gekennzeichnet, daß die inhärente Viskosität des Polyetherketons 0,8 bis 1,5 beträgt und das Polyetherketon ein Ether/Ketonverhältnis von 1/1 aufweist.

6. Verbundmaterial nach einem oder mehreren der Ansprüchen 1 bis 6, dadurch gekennzeichnet, daß die Verstärkungsfasern orientiert angeordnet sind.

7. Verbundmaterial nach einem oder mehreren der Ansprüche 1 bis 6, dadurch gekennzeichnet, daß C) als übliche Zusätze Füllstoffe, Farbpigmente, Stabilisatoren und/oder Verarbeitungshilfsmittel enthalten sind.

8. Formkörper, hergestellt aus Verbundmaterialien gemäß einem oder mehreren der Ansprüche 1 bis 7.

9. Formkörper nach Anspruch 8, dadurch gekennzeichnet, daß er orientiert angeordnete Endlosfasern enthält.

10. Formkörper nach Anspruch 9, dadurch gekennzeichnet, daß er ein Gewebe aus Endlosfasern enthält.

Europäisches Patentamt

# EUROPÄISCHER RECHERCHENBERICHT

Nummer der Anmeldung

EP 90102669.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| X | US - A - 4 616 056 (CHAN et al.) * Ansprüche; Spalte 7, Zeilen 8-23 * | 1,2,4, 5,7,8 | C 08 L 73/00<br>C 08 L 71/12<br>C 08 J 5/04<br>C 08 K 7/06<br>C 08 K 7/14 |
| X | US - A - 4 609 714 (HARRIS et al.) * Ansprüche; Spalte 16, Zeilen 5-20 * | 1,2,5, 7,8 | |
| X | EP - A1 - 0 192 408 (RAYCHEM CORPORATION) * Ansprüche; Seite 3, Formel II; Seite 11, Zeilen 12-26 * | 1,2,5, 7,8 | |
| X | EP - A1 - 0 163 464 (RAYCHEM CORPORATION) * Ansprüche; Seite 14, Zeile 15 - Seite 15, Zeile 6 * | 1,2,5, 7,8 | |
| A | DATABASE WPIL, Nr. 87-309 168, Derwent Publications Ltd, London, GB & JP-A-62 115 033 (SUMITOMO CHEM. IND. K.K.) 26-05-1987 * Zusammenfassung * | 1-3,6, 8-10 | **RECHERCHIERTE SACHGEBIETE (Int Cl 5)**<br>C 08 L 71/00<br>C 08 L 73/00<br>C 08 J<br>C 08 K |
| A | DATABASE WPIL, Nr. 84-296 950, Derwent Publications Ltd, London, GB & JP-A-59 182 842 (SUMITOMO CHEMICAL K.K.) 17-10-1984 * Zusammenfassung * | 1-3,4, 8 | |

Der vorliegende Recherchenbericht wurde für alle Patentansprüche erstellt.

| Recherchenort | Abschlußdatum der Recherche | Prüfer |
|---|---|---|
| WIEN | 04-05-1990 | WEIGERSTORFER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82